**Europäisches Patentamt**

**European Patent Office**

**Office européen des brevets**

(11) Veröffentlichungsnummer: **0 367 054 B1**

## EUROPÄISCHE PATENTSCHRIFT

(45) Veröffentlichungstag der Patentschrift: **23.06.93**

(21) Anmeldenummer: **89119552.1**

(22) Anmeldetag: **21.10.89**

(51) Int. Cl.5: **C08F 220/18**, C09J 133/06

(54) **UV-vernetzbare Massen auf Basis von Isoamyl(meth)acrylatcopolymerisaten.**

(30) Priorität: **31.10.88 DE 3836968**

(43) Veröffentlichungstag der Anmeldung:
**09.05.90 Patentblatt 90/19**

(45) Bekanntmachung des Hinweises auf die
Patenterteilung:
**23.06.93 Patentblatt 93/25**

(84) Benannte Vertragsstaaten:
**AT BE CH DE ES FR GB IT LI NL SE**

(56) Entgegenhaltungen:
GB-A- 922 172
US-A- 4 148 987
US-A- 4 737 559

(73) Patentinhaber: **BASF Aktiengesellschaft**
**Carl-Bosch-Strasse 38**
**W-6700 Ludwigshafen(DE)**

(72) Erfinder: **Rehmer, Gerd, Dr.**
**Koenigsberger Strasse 1**
**W-6711 Beinderscheim(DE)**
Erfinder: **Boettcher, Andreas, Dr.**
**Konrad-Adenauer-Ring 38**
**W-6907 Nussloch(DE)**
Erfinder: **Pfoehler, Peter, Dr.**
**Franz-Stuetzel-Strasse 51**
**W-6720 Speyer(DE)**
Erfinder: **Aydin, Oral, Dr.**
**Sophienstrasse 14**
**W-6800 Mannheim 1(DE)**
Erfinder: **Nestler, Gerhard, Dr.**
**Van-Leyden-Strasse 17**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

**Beschreibung**

Diese Erfindung betrifft UV-vernetzbare Massen, insbesondere Schmelz(haft)kleber und Dichtungsmassen, insbesondere Schmelzhaftkleber, die durch Bestrahlen mit ultraviolettem Licht vernetzt werden können und die eine niedrige Schmelzviskosität und eine hohe Reaktivität gegenüber UV-Strahlen besitzen. Die Schmelzkleber sollen nach der Bestrahlung mit ultraviolettem Licht eine hohe Klebrigkeit (Tack), eine hohe Schälfestigkeit und eine hohe Scherstandfestigkeit, insbesondere auch bei höheren Temperaturen aufweisen.

Die Einführung moderner Fertigungsverfahren, die sich durch einen sorgsamen Umgang mit Energie, Rohstoffen und der Umwelt auszeichnen, ist an die Entwicklung entprechender Produkte gekoppelt.

Haftkleber sollen permanente Klebrigkeit, gutes Auffließverhalten auf unterschiedlichen Oberflächen sowie ein ausgewogenes Maß von Adhäsion und Kohäsion besitzen.

In der Regel werden mit Haftklebern flächige Substrate beschichtet und so z.B. selbstklebende Klebebänder oder Selbstklebetiketten hergestellt.

Dabei muß häufig der Haftkleber als Lösung in organischen Lösungsmittel auf das jeweilige Substrat aufgebracht und die Lösemittel dann abgedampft werden, so daß im allgemeinen eine Rückgewinnungsanlage für die Lösemittel erforderlich ist, da sonst eine starke Umweltbelastung durch Lösemitteldämpfe erfolgt.

Derartige Nachteile werden beim Einsatz von wäßrigen Haftkleberdispersionen zwar vermieden, doch erfordert das Trocknen von wäßrigen Zubereitungen große Energiemengen und ermöglicht nur verhältnismäßig kleine Fertigungsgeschwindigkeiten bei hohen Klebstoffdicken.

Der vorteilhafteste Weg zum Aufbringen von Haftklebern ist das Aufbringen einer Schmelze des Klebers, da hierbei keine Lösemittel abgetrennt werden müssen.

In der DE-A-36 13 082 werden strahlenvernetzbare Haftklebstoffe auf der Basis von (meth)-acrylgruppenhaltigen Polyestern beschrieben. Die Produkte werden nach einem aufwendigen mehrstufigen Verfahren hergestellt. Nach Zusatz eines Photoinitiators lassen sich diese Produkte durch Bestrahlen mit ultraviolettem Licht vernetzen. Um jedoch ausreichende Scherstandfestigkeiten der Verklebungen zu erzielen, müssen diese Produkte unter Inertgasatmosphäre bestrahlt werden. Ungenügend bleibt jedoch ihre Klebrigkeit.

In der DE-A-2 411 169 werden Haftklebstoffe auf Basis von (Meth)acrylsäureestercopolymerisaten beschrieben, die u.a. Umsetzungsprodukte von Glycidylmethacrylat mit 4-Hydroxybenzophenon einpolymerisiert enthalten. Diese Copolymerisate lassen sich zwar in Form von Schmelzen applizieren, jedoch fehlt ihnen ein ausgewogenes Maß von Klebrigkeit und Scherstandfestigkeit. Ihre Reaktivität gegenüber UV-Strahlen ist zudem gering.

In der US-A-4 737 559 werden in organischen Lösemitteln gelöste, durch ultraviolettes Licht vernetzbare Haftklebstoffe auf der Basis von (Meth)acrylsäureestercopolymerisaten beschrieben, die monoethylenisch ungesättigte aromatische Ketone einpolymerisiert enthalten. Ihrer Verwendung als Schmelzhaftkleber steht jedoch ihre hohe Schmelzviskosität und ihre geringe UV-Reaktivität gegenüber.

Darüber hinaus sind eine Reihe von Haftkleberformulierungen für die UV-Härtung bekannt, die olefinisch ungesättigte Monomere als viskositätsregulierende Reaktivverdünner enthalten. Mit diesen Formulierungen werden nur dann gute Haftklebereigenschaften erzielt, wenn die Bestrahlung unter Inertgasatmosphäre erfolgt. Zudem erfordert die Verwendung reizender Monomerer in derartigen Formulierungen spezielle arbeitshygienische Maßnahmen.

Es besteht daher ein Bedarf an Schmelzhaftklebern, die an der Luft vernetzt werden können, die eine hohe Reaktivität gegenüber UV-Strahlen, die frei von Lösemitteln und ungesättigten Monomeren sowie geruchsarm sind, die möglichst wenig verfärben, möglichst farblos sind, bei Temperaturen von unter 120°C eine ausreichend geringe Schmelzviskosität aufweisen, und die im vernetzten Zustand eine hohe Klebrigkeit, eine hohe Scherstandfestigkeit und eine hohe Schälfestigkeit aufweisen.

Es wurde nun überraschenderweise gefunden, daß unter Luftsauerstoffatmosphäre durch ultraviolette Strahlung vernetzbare Massen auf der Basis von (Methyl)acrysäureestercopolymerisaten (A) eines K-Wertes von 10 bis 100 durch radikalische Polymerisation in Substanz oder Lösung von

a) 5 bis 97,4 Gew.-% i-Amylacrylat und/oder i-Amylmethacrylat und

b) 0 bis 89,9 Gew.-% (Meth)acrylsäureestern, deren Homopolymerisate eine Glasübergangstemperatur von unter -30°C haben und

c) 2,5 bis 30 Gew.-% $\alpha,\beta$-monoolefinisch ungesättigten Verbindungen, deren Homopolymerisate eine Glastemperatur von über -30°C haben und

d) 0 bis 10 Gew.-% monoolefinisch ungesättigten Säuren und/oder deren Anhydriden und

e) 0 bis 20 Gew.-% weiteren olefinisch ungesättigten Monomeren mit wenigstens einer der folgenden funktionellen Gruppen: Hydroxi-, Amid-, Epoxid-, Ether-, Ester-, Urethan-, Harnstoff-, prim., sek., tert. Amin und Ether und

f) 0,1 bis 5 Gew.-% eines copolymerisierbaren Benzophenon- oder Acetophenonderivates erhalten werden, wobei die Summe der Gewichtsprozente X = a + b + c + d + f jeweils 100 beträgt.

Die Monomeren (a) sind notwendiger Bestandteil der Copolymerisate (A) und in Mengen von 5 bis 97,4 Gew.-% in diesen enthalten. Bevorzugt sind Copolymerisate, die über 15 Gew.-% i-Amyl(meth)acrylat enthalten, ganz besonders bevorzugt solche, die über 25 Gew.-% i-Amyl(meth)acrylat einpolymerisiert enthalten.

Die Copolymerisate (A) enthalten als (Meth)acrylsäureester (b) solche, deren Homopolymerisate Glastemperaturen von unter -30°C haben, z.B. 2-Ethylhexylacrylat, n-Butylacrylat, i-Octylacrylat und n-Heptylacrylat.

Des weiteren enthalten die Copolymerisate (A) in Mengen von 2,5 bis 30 Gew.-% $\alpha,\beta$-monoolefinisch ungesättigte Verbindungen (c) einpolymerisiert, deren Homopolymerisate Glastemperaturen von über -30°C aufweisen, z.B. Methylmethacrylat, Vinylacetat, Ethylacrylat, Methylacrylat und iso-Butylacrylat.

Als Monomere (d) enthalten die Copolymerisate (A) 0 bis 10 Gew.-% $\alpha,\beta,$-monoolefinisch ungesättigte Säuren und/oder deren Anhydride einpolymerisiert. Von dieser Monomer-Spezies sind hervorzuheben 3 bis 6 C-Atome enthaltende Mono- und/oder Dicarbonsäuren und/oder deren Anhydride und/oder die Halbester der Dicarbonsäuren, z.B. Acrylsäure, Methacrylsäure, Maleinsäure, Fumarsäure, Itaconsäure, Maleinsäureanhydrid, Itaconsäureanhydrid, Vinylphosphonsäure, Vinylsulfonsäure, Maleinsäuremono-n-butyl-ester, Maleinsäuremono-i-amylester, Maleinsäuremono-ioctylester. Bevorzugt enthalten die Copolymerisate (A) Acryl- und/oder Methacrylsäure in Mengen von 0,5 bis 6 Gew.-% einpolymerisiert.

Zu den Monomeren (e) gehören $\alpha,\beta$-monoolefinisch ungesättigte Verbindungen wie z.B. N-Vinylformamid, N-Vinylpyrrolidon, 2-Hydroxiethyl(meth)acrylat, Tetrahydrofurfuryl-2-(meth)acrylat und Glycidyl(meth)-acrylat.

Die Copolymerisate (A) enthalten 0,1 bis 5 Gew.-% copolymerisierbare Benzophenonderivate und/oder Acetophenonderivate (f), bevorzugt in Mengen von 0,25 bis 1,5 Gew.-%.

Derartige Verbindungen (f) sind z.B. aus den US-A-3 214 492, 3 429 852, 4 148 987 sowie 4 737 559 und der DE-A-2 411 169 bekannt, z.B. p-Acryloxybenzophenon, p-Methacryloxybenzophenon, o-Acryloxybenzophenon, o-Methacryloxybenzophenon, p-(Meth)acryloxyethoxybenzophenon, bevorzugt ist p-Methacryloxybenzophenon. Des weiteren können auch Gemische aus o-Methacryloxybenzophenon und p-Methacryloxybenzophenon eingesetzt werden. Besonders bevorzugt sind copolymerisierbare Benzophenonderivate, insbesondere solche, die sich von - gegebenenfalls substituierten - Benzophenoncarbonsäuren, wie 2-Benzophenoncarbonsäure, 3-Benzophenoncarbonsäure und ganz besonders solche, die sich von 4-Benzophenoncarbonsäure ableiten. Zu diesen ganz besonders bevorzugten gehören die Benzophenoncarbonsäuremonoester von Monohydroxyalkyl(meth)acrylatenmit 2 bis 12 Methylengruppen, bevorzugt solche mit 3 bis 8 Methylengruppen, zwischen der Hydroxy- und der (Meth)acryloxygruppe, wie z.B. die 4-Benzophenoncarbonsäureester von 1,4-Butandiolmono(meth)acrylat, 1,2-Ethandiolmono(meth)acrylat, 1,8-Octandiolomono-(meth)acrylat. Besonders bevorzugt ist z.B. (2-Acryloxy)butyl-ortho-benzoylbenzoat.

Als Schmelzhaftkleber werden Copolymerisate (A) mit einem Staudinger-Index von 0,1 100 ml/g bis 1,00 100 ml/g verwendet; besonders bevorzugt sind hierbei Copolymerisate mit einem Staudinger-Index von 0,11 100 ml/g bis 0,49 100 ml/g, ganz besonders bevorzugt solche mit einem Staudinger-Index von 0,20 100 ml/g bis 0,35 100 ml/g.

Copolymerisate (A), die iso-Amylacrylat und/oder iso-Amylmethacrylat, d.h. den (Meth)acrylsäureester von 3-Methyl-butanol-(1) (Isoamylalkohol) in Mengen von 5 bis 97,4 Gew.-% besonders bevorzugt in Mengen von 25 bis 95 Gew.-% einpolymerisiert enthalten, lassen sich besonders vorteilhaft für UV-vernetzbare Schmelzhaftkleber und UV-vernetzbare Schmelzdichtungsmassen verwenden.

UV-vernetzbare Schmelzhaftkleber mit einem besonders ausgewogenen Eigenschaftsbild hinsichtlich Schmelzviskosität, Beschichtungsverhalten, Reaktivität, Klebrigkeit, Kohäsion und Schälfestigkeit werden erhalten, wenn die Copolymerisate K-Werte von 25 bis 45, bevorzugt 30 bis 40 haben, und die

a) 17 bis 88 Gew.-%, bevorzugt 23 bis 80 Gew.-% i-Amylacrylat und

b) 5 bis 74 Gew.-% n-Butylacrylat und/oder 2-Ethylhexylacrylat und/oder i-Octylacrylat und/oder n-Heptylacrylat und

c) 5 bis 30 Gew.-% Methylacrylat und/oder Ethylacrylat, bevorzugt 10 bis 20 Gew.-% Methylacrylat und

d) 1 bis 6 Gew.-% bevorzugt 1,5 bis 4 Gew.-% Acryl- und/oder Methacrylsäure und

f) 0,5 bis 1,5 Gew.-% eines copolymerisierbaren Benzophenonderivates

einpolymerisiert enthalten.

3

Die Copolymerisate (A) werden bei Temperaturen von 70 bis 150°C vorzugsweise bei Temperaturen im Bereich von 80 bis 120°C, in Gegenwart von 0,25 bis 10 Gew.-%, bezogen auf die Monomeren, an Peroxiden oder Azostartern als Polymerisationsinitiatoren und in Gegenwart von 0 bis 200 Gew.-%, bevorzugt 5 bis 100 Gew.-%, bezogen auf die Monomeren, an indifferenten Lösungsmitteln, d.h. durch Substanz- oder aber bevorzugt durch Lösungspolymerisation hergestellt.

Als Polymerisationsinitiatoren sind geeignet Peroxide z.B. Acylperoxide wie Benzoylperoxid, Dilauroylperoxid, Didecanoylperoxid, Isononanoylperoxid, Alkylperester wie tert.-Butylperpivalat, ter-Butyl-per-2-ethyl-hexanoat, tert-Butylpermaleinat, tert-Butylperiosononanoat, tert-Butylperbenzoat, Dialkylperoxide wie Dicumylperoxid, tert-Butylcumylperoxid, Di-tert-Butyl-peroxid und Peroxidicarbonate wie Dimistrylperoxidicarbonat, Dicetylperoxidicarbonat, Bis(4-tert-butyl-cyclohexyl)peroxidicarbonat, Hydroperoxide wie Cumolhydroperoxid und tert-Butyl-hydroperoxid und Polymerisationsinitiatoren wie 3,4-Dimethyl-3,4-diphenylhexan und 2,3-Dimethyl-2,3-diphenylbutan.

Besonders geeignet sind Ketonperoxide wie Methylethylketonperoxid, Acetylacetonperoxid, Cyclohexanonperoxid, Methylisobutylketonperoxid. Des weiteren Azostarter wie z.B. 2,2'-Azobisisobutyronitril (Porofor N), Dimethyl-2,2'-azobisisobutyrat und 4,4'-Azo-bis-(4-cyanvaleriansäure). Die genannten Initiatoren können für sich allein oder im Gemisch verwendet werden.

Als Lösemittel werden vorzugsweise solche eines Siedebereichs von 50 bis 150°C verwendet, die daneben noch kleine Anteile höher- oder niedrigsiedender Komponenten enthalten können. Geeignet sind z.B. Kohlenwasserstoffe wie Toluol und Benzine, die vorzugsweise einen Siedebereich von 60 bis 120°C haben. Von besonderem Interesse als Lösemittel sind Alkohole wie Methanol, Ethanol, n- und iso-Propanol, wobei Isopropanol und Isobutanol sowie Gemische aus diesen, insbesondere aber Isopropanol bevorzugt werden.

Ferner geeignete Lösemittel sind Ketone wie Aceton, Methylethylketon und Ester wie Essigsäureethylester oder Gemische aus diesen oder Gemische mit Isopropanol und/oder Isobutanol, deren Anteil mindestens 5, insbesondere vorzugsweise mindestens 10 Gew.-%, bezogen auf das Lösemittelgemisch, beträgt.

Für die Durchführung der Polymerisation können dem Reaktionsgemisch auch den Polymerisationsgrad senkende Verbindungen, sog. Polymerisationsregler zugesetzt werden. Außer insbesondere sekundäre Alkohole, sind dies z.B. Mercaptane wie Mercaptoethanol, Mercaptobernsteinsäure, Mercaptoglycerin, 3-Mercaptopropyltrimethoxysilan, Ether wie Dioxan und Tetrahydrofuran, Kohlenwasserstoffe wie Isopropylbenzol und Verbindungen wie Bromoform und Tetrachlorkohlenstoff. Polymerisationsregler wie z.B. Tetrahydrofuran werden dabei in Mengen von 0,01 bis 50 Gew.-%, bezogen auf die Summe aus Lösemittel und Regler, dem Reaktionsgemisch zugesetzt.

Die Polymerisation wird in an sich üblicher Weise in einer Polymerisationsapparatur, die im allgemeinen mit einem Rührer, mehreren Zulaufgefäßen, Rückflußkühler und Heizung/Kühlung versehen ist und für das Arbeiten unter Inertgasatmosphäre und Überdruck bzw. vermindertem Druck ausgerüstet ist, durchgeführt. Im allgemeinen wird dafür ein Kessel eingesetzt. Die Polymerisation wird meist bis zu einem Umsatz der Monomeren von über 99,0 %, bevorzugt von über 99,9 % durchgeführt.

Das Lösemittel(gemisch) und gegebenenfalls flüchtige Anteile werden nach beendeter Polymerisation abdestilliert. Wobei Reste unter vermindertem Druck, bevorzugt bei über 120°C entfernt werden. Die flüchtigen Anteile können jedoch auch in Entgasungsgeräten wie Extrudern und Fallfilmverdampfern entfernt werden. Der Anteil der nach der Entgasung flüchtigen Anteile liegt im allgemeinen unter 0,2 Gew.-%.

Die neuen Schmelzhaftkleber können in an sich üblicher Weise modifiziert und/oder konfektioniert werden. Überraschenderweise können die üblichen klebrigmachenden Harze (Tackifier), z.B. Kohlenwasserstoffharze, gegebenenfalls modifizierte Kollophoniumharze, Terpenphenolharze, Ketonharze, Aldehydharze, den Copolymerisaten (A) in Mengen von bis zu 50 Gew.-% zugesetzt werden oder auch Homopolymerisate wie z.B. Poly(2-ethylhexylacrylat), Poly(n-butylacrylat), ferner Weichmacher, z.B. auf Basis von Mono-, Dioder Polyesterverbindungen, polychlorierten Kohlenwasserstoffen oder Paraffinölen, Farbstoffe, Pigmente oder Stabilisatoren oder kautschukelastische Stoffe wie Natur- oder Synthesekautschuk, Styrolbutadiencopolymere, Polyvinylether sowie ferner Polybutadienöle, die in geringen Mengen zugesetzt werden können.

Des weiteren können die neuen Schmelzhaftkleber durch den Zusatz geringer Mengen olefinisch ungesättigter Verbindungen modifiziert werden; bevorzugt sind mindestens diolefinisch ungesättigte Verbindungen. Für Haftkleberanwendungen ist ein Zusatz von über 10 Gew.-% an diolefinisch ungesättigten Verbindungen im allgemeinen nicht zu empfehlen, weil die vernetzten Beschichtungen deutlich an Klebrigkeit verlieren.

Geeignete mehrfach olefinisch ungesättigte Verbindungen sind z.B. (Meth)acrylsäurediester von Diolen wie z.B. 1,4-Butandioldiacrylat, Di(meth)acrylate, die sich von Polyetherolen ableiten, z.B. Polytetrahydrofurandi(meth)acrylat.

Eine weitere Modifizierung der neuen Schmelzhaftkleber kann durch den Zusatz von bis zu 5 Gew.-% aromatischen Ketonen, z.B. Benzophenon und Benzophenonderivaten, wie 4-Hydroxibenzophenon, 4-Benzophenoncarbonsäure erreicht werden.

Mit Vorteil werden Benzophenonderivate verwendet, die eine oder mehrere olefinisch ungesättigte Gruppen enthalten. Monoolefinisch ungesättigte Benzophenonderivate sind z.B. die Monomeren der Gruppe (f).

Schmelzhaftkleber sollen bei möglichst niedriger Temperatur verarbeitet werden können. Die erfindungsgemäßen Schmelzhaftkleber lassen sich z.T. bei Temperaturen von unter 80°C verarbeiten, so daß auch weichgemachte PVC-Folien oder Polypropylenfolien beschichtbar sind.

Überraschenderweise können die erfindungsgemäßen Schmelzhaftkleber auch direkt auf Papier oder Fliesstoffen beschichtet werden. Insbesondere kann dabei auch so verfahren werden, daß die Fliesstoffe mit den flüssigen Schmelzhaftklebern getränkt werden, überschüssiger Schmelzhaftkleber abgequetscht wird und anschließend das getränkte Flies beidseitig bestrahlt wird. Hierbei kann diskontinuierlich oder kontinuierlich verfahren werden.

Auch erlauben die erfindungsgemäßen Schmelzhaftkleber die Vernetzung dickerer Schichten von z.B. über 2 mm.

Überraschenderweise lassen sich die neuen Schmelzhaftkleber leicht durch die Wahl der Monomerzusammensetzung in ihren Eigenschaften den geforderten Anwendungsfällen anpasssen. So können leicht Etiketten hergestellt werden, die sich rückstandsfrei von verschiedenen Substraten abziehen lassen (wiederabziehbare Etiketten, wiederabziehbare Klebebänder).

Die neuen Schmelzhaftkleber können in an sich üblicher Weise verarbeitet werden. Dabei reichen im allgemeinen Temperaturen der Schmelze von bis zu 130°C aus, bevorzugt unter 100°C, ganz besonders bevorzugt unter 80°C.

Die neuen, bei Raumtemperatur fließenden Schmelzkleber können leicht mit den üblichen Schmelzkleberauftragsvorrichtungen, z.B. Düsen, Walzen, Rakeln und im Siebdruckverfahren auf flächige Gebilde wie Folien, Papier, Pappe, sowie Holz, Metalle, Gummi und Glas aufgebracht werden. Als Substrate geeignete Folien können z.B. aus Polyethylen, Polyamiden, Polyethylenglykolterephthalat, Polypropylen, Polyvinylchlorid oder Aluminium bestehen.

Die mit den Schmelzhaftklebern erhaltenen Beschichtungen können durch Bestrahlen mit ultraviolettem Licht vernetzt werden, wodurch man gut klebende Überzüge erhält, die eine hohe Kohäsion, eine sehr gute Klebrigkeit, eine sehr gute Schälfestigkeit bei vorzüglicher Alterungsbeständigkeit aufweisen.

Die Bestrahlung der Beschichtung kann mit handelsüblichen UV-Strahlern, z.B. Quecksilbermitteldruckstrahlern mit einer Strahlungsleistung von 80 Watt/cm und höher erfolgen. Ebenso können auch elektrodenlose UV-Strahler mit einer Strahlungsleistung von z.B. 80 Watt/cm oder 120 Watt/cm, eingesetzt werden (Fusion-System). Punktförmig aufgetragene Schmelzhaftkleber können durch Bestrahlen mit dem UV-Licht von UV-Punktstrahlern oder UV-Kleinflächenstrahlern vernetzt werden. Eine Übersicht gibt z.B. das Buch von Roger Philips, "Sources and Applications of Ultraviolet Radiation", Acadamic Press, London, New York 1983.

Die Geschwindigkeit mit der die beschichteten Trägermaterialien die UV-Bestrahlungsstrecke durchlaufen können, um eine für den jeweiligen Anwendungsfall ausreichende Vernetzung zu erzielen, hängt u.a. von der Dicke der Beschichtung, von der Strahlungsleistung und der Anzahl der UV-Strahler und deren Abstand von der Beschichtungsoberfläche ab. Eine größere Anzahl Strahler und eine größere Strahlungsleistung ermöglicht i.a. eine höhere Fertigungsgeschwindigkeit.

Insbesondere kann die Bestrahlung auch gleichzeitig sowohl von der Beschichtungsseite und von der Substratseite her erfolgen, wenn Substrate (Folien) verwendet werden, die genügend UV-durchlässig sind. Auch kann der Bestrahlungsvorgang jederzeit unterbrochen und dann wieder fortgesetzt werden.

Klebeprüfungen

Für die Durchführung der Klebeprüfungen werden auf einem beheizbaren Streichtisch Substrate (Polyethylenglykolterephthalatfolien, Hostaphan® RN 36 der Fa. Hoechst) bei 95°C mit den Schmelzhaftklebern so beschichtet, daß sich ein Auftragsgewicht von 25 g/m² ergibt.

Die beschichteten Folien werden auf das laufende Endlosband einer UV-Bestrahlungsanlage gelegt und mit einer Geschwindigkeit von 20 m/min in einem Abstand von 11 cm unter zwei Quecksilbermitteldurckstrahlern mit einer Strahlungsleistung von jeweils 80 Watt/cm hindurchgefahren. Die Bestrahlung erfolgt in Luftsauerstoffatmosphäre.

Die bestrahlten Folien werden anschließend mit abhäsiv beschichtetem Papier (Siliconpapier) abgedeckt und die Klebeprüfungen durchgeführt. Die so hergestellten Folien werden in 2 cm breite Streifen geschnitten und diese Streifen mit der Haftklebeschicht auf eine verchromte Messingplatte aufgebracht. Die Platte wird dann mit den Streifen 24 h bei 23°C und 65 % rel. Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen.

Bei der Messung der Scherfestigkeit wird eine verklebte Fläche von 20 x 25 mm zurechtgeschnitten, die Platte senkrecht eingespannt und der überhängende Teil des Klebestreifens mit einem Gewicht von 1 kg belastet. Es wird die Zeit bestimmt, bis sich die Verklebung löst. Die Messung wird bei 23°C und 50°C durchgeführt. Alle Messungen werden 5-fach gemacht.

Die in den folgenden Beispielen angegebenen Teile und Prozente beziehen sich auf das Gewicht. Die Bestimmung der K-Werte erfolgt nach DIN 53 726 in 1-%iger Lösung in Tetrahydrofuran bei 25°C.

Der Staudingerindex (Viskositätszahl) wird in Tetrahydrofuran bei 25°C nach bekannten Methoden bestimmt (z.B. G.V. Schulz, H.-J. Cantow in Houben-Weyl, Methoden der organischen Chemie, G. Thime Verlag, 1955, Bd. 3/1, Seiten 431 bis 445 und B. Vollmert: Grundriss der makromolekularen Chemie, Band III, S. 55 ff.

Beispiel 1

150 g einer Mischung aus 500 g i-Amylacrylat, 300 g n-Butylacrylat, 175 g Methylacrylat, 25 g Acrylsäure und 10 g para-Methacryloxybenzophenon werden zusammen mit 160 g Essigsäureethylester, 50 g Tetrahydrofuran und 9 g tert-Butyl-per-2-ethyl-hexanoat 20 Minuten unter Rückfluß gekocht. Im Verlauf von 3 Stunden gibt man den Rest der Monomermischung und gleichzeitig im Verlauf von 4 Stunden eine Lösung 5 g tert-Butyl-per-2-ethylhexanoat in 40 g Essigsäureethylester hinzu, wobei man die Reaktionsmischung unter schwachem Rückfluß hält. Anschließend rührt man noch 4 Stunden nach.

Nach Destillation des Lösemittels und Entfernung flüchtiger Anteile bei 130°C unter vermindertem Druck erhält man ein Copolymerisat mit dem K-Wert 35,4.

Beispiel 2

150 g einer Mischung aus 870 g i-Amylacrylat, 100 g Methylacrylat, 30 g Acrylsäure und 7,5 g 4-Benzophenoncarbonsäuremonoester von 1,4-Butandiolmonoacrylat werden zusammen mit 210 g Isopropanol und 10 g tert-Butyl-per-2-ethyl-hexanoat 15 Minuten unter schwachem Rückfluß gekocht. Im Verlauf von 3 Stunden gibt man den Rest der Monomermischung und gleichzeitig im Verlauf von 4 Stunden eine Lösung 5 g tert-Butyl-per-2-ethylhexanoat in 40 g Essigsäureethylester hinzu, wobei man die Reaktionsmischung unter schwachem Rückfluß hält. Anschließend rührt man noch 4 Stunden nach.

Nach Destillation des Lösemittels und Entfernung flüchtiger Anteile bei 130°C unter vermindertem Druck erhält man ein Copolymerisat mit dem K-Wert 30.

Beispiele 3 bis 5

In Analogie zu Beispiel 2 werden Copolymerisate der folgenden Zusammensetzung hergestellt:

| Beispiel | Copolymerisat Zusammensetzung | Benzophenonderivat | K-Wert |
|---|---|---|---|
| 3 | 96,0 Gew.-% 2-EHA<br>3,0 Gew.-% As | 1,0 p-Methacryloxybenzophenon | 33 |
| 4 | 35,25 Gew.-% 2-EHA<br>62,0 Gew.-% n-BA<br>2,0 Gew.-% As | 0,75 p-Methacryloxybenzophenon | 37 |
| 5 | 25,0 Gew.-% i-AA<br><br>50,5 Gew.-% n-BA<br>10,0 Gew.-% 2-EHA<br>10,0 Gew.% MA<br>3,0 Gew.-% MAS | 1,5 (2-Hydroxy-3-methacryloxy)-propyl-ortho-benzoyl-benzoat (gem. Bsp. 1 d. US-PS 3 429 852) | 30 |

Abk. 2-EHA = 2-Ethylhexylacrylat

i-AA = Isoamylacrylat

n-BA = n-Butylacrylat

MA = Methylacrylat

As = Acrylsäure

MAs = Methacrylsäure

Beispiele 6 bis 8

Es wurden die folgenden Abmischungen mit einem üblichen Tackifier, Foral 85 (Fa. Hercules) herge-stellt.

| Mischung | Copolymerisat | Foral 85 |
|---|---|---|
| M 1 | 100 g gem. Bsp. 1 | 12,5 g |
| M 2 | 100 g gem. Bsp. 3 | 10,0 g |
| M 3 | 100 g gem. Bsp. 4 | 12,5 g |

Die Ergebnisse der Bestrahlungsversuche mit den Copolymerisaten aus den Beispielen 1 bis 5 sowie den Mischungen aus den Beispielen 6 bis 8 sind in der nachstehenden Tabelle wiedergegeben.

7

Tabelle

| Ergebnisse der anwendungstechnischen Prüfung als Haftkleber | | | | |
|---|---|---|---|---|
| Copolymerisat/Mischung aus Beispiel | Scherstandfestigkeit [h] | | Schälfestigkeit [N/2 cm] n. 24 Stunden | Klebrigkeit [*] [Benotung] |
| | 23°C | 50°C | | |
| 1 | > 100 | > 6 | 9,6 | sehr gut |
| 2 | > 100 | > 24 | 12,5 | sehr gut |
| 3 | 1,5 | - | 10,0 | sehr gut, weich |
| 4 | 2 | < 0,5 | 11,5 | sehr gut, weich |
| 5 | > 24 | > 4 | 8,5 | gut |
| 6 | > 24 | > 4 | 13,0 | sehr gut |
| 7 | < 0,5 | - | - | - |
| 8 | < 0,5 | - | - | - |

[*] Die Klebrigkeit wurde durch eine Gruppe beurteilt.

**Patentansprüche**
**Patentansprüche für folgende Vertragssaaten : AT, BE, CH, DE, FR, GB, IT, LI, NL, SE**

1. Unter Luftsauerstoffatomosphäre durch ultraviolette Strahlung vernetzbare Nassen auf der Basis von (Meth)acrylsäureester-Copolymerisaten eines K-Wertes von 10 bis 100, erhalten durch radikalische Polymerisation in Substanz oder Lösung von
   a) 5 bis 97,4 Gew.-% i-Amylacrylat und/oder i-Amylmethacrylat und
   b) 0 bis 89,9 Gew.-% (Meth)acrylsäureestern, deren Homopolymerisate eine Glasübergangstemperatur von unter -30°C haben und
   c) 2,5 bis 30 Gew.-% $\alpha,\beta$-monoolefinisch ungesättigten Verbindungen, deren Homopolymerisate eine Glastemperatur von über -30°C haben und
   d) 0 bis 10 Gew.-% monoolefinisch ungesättigten Säuren und/oder deren Anhydriden und
   e) 0 bis 20 Gew.-% weiterer olefinisch ungesättigten Monomeren mit wenigstens einer der folgenden funktionellen Gruppen: Hydroxi-, Amid-, Epoxid-, Ether-, Ester-, Urethan-, Harnstoff-, prim., sek., tert. Amin und Ether und
   f) 0,1 bis 5 Gew.-% eines copolymerisierbaren Benzophenon- oder Acetophenonderivates,
   wobei die Summe der Gewichtsprozente X = a + b + c + d + f jeweils 100 beträgt.

2. Massen nach Anspruch 1, dadurch gekennzeichnet, daß als copolymerisierbares Benzophenonderivat 4-(Meth)acryloxy-benzophenon eingesetzt wird.

3. Massen nach Anspruch 1, dadurch gekennzeichnet, daß als copolymerisierbares Benzophenonderivat eine Mischung aus 2-(Meth)acryloxybenzophenon und 4-(Meth)acryloxybenzophenon eingesetzt wird.

4. Massen nach Anspruch 1, dadurch gekennzeichnet, daß als copolymerisierbares Benzophenonderivat (4-Acryloxy)butyl-para-benzoylbenzoat eingesetzt wird.

5. Massen nach Anspruch 1, dadurch gekennzeichnet, daß als copolymerisierbares Benzophenonderivat (2-Acryloxy)butyl-ortho-benzoylbenzoat eingesetzt wird.

6. Massen nach Anspruch 1, dadurch gekennzeichnet, daß als copolymerisierbares Benzophenonderivat (2-Hydroxy-3-methacyloxy)propyl-ortho-benzoylbenzoat eingesetzt wird.

7. Massen nach den Ansprüchen 1 bis 6, dadurch gekennzeichnet, daß sie einen Staudinger-Index von 0,11 bis 0,49 100 ml/g aufweisen.

8. Verwendung der Massen gemäß den Ansprüchen 1 bis 7 als Schmelzhaftkleber.

EP 0 367 054 B1

**9.** Verwendung der Massen gemäß Ansprüchen 1 bis 7 als Schmelz-Dichtungsmassen.

**10.** Verwendung der Schmelzhaftkleber nach Anspruch 8, dadurch gekennzeichnet, daß die Schmelzhaftkleber auf flächige Substrate bei Raumtemperatur oder höheren Temperaturen aufgebracht und durch Bestrahlen mit UV-Strahlung vernetzt werden.

**Patentansprüche für folgenden Vertragsstaat : ES**

**1.** Verfahren zur Herstellung von unter Luftsauerstoffatmosphäre vernetzbaren Massen auf der Basis von (Meth)acrylsäureester-Copolymerisaten eines K-Wertes von 10 bis 100, dadurch gekennzeichnet, daß man ein Monomerengemisch aus
   a) 5 bis 97,4 Gew.-% i-Amylacrylat und/oder i-Amylmethacrylat und
   b) 0 bis 89,9 Gew.-% (Meth)acrylsäureestern, deren Homopolymerisate eine Glasübergangstemperatur von unter -30°C haben und
   c) 2,5 bis 30 Gew.-% $\alpha,\beta$-monoolefinisch ungesättigten Verbindungen, deren Homopolymerisate eine Glastemperatur von über -30°C haben und
   d) 0 bis 10 Gew.-% monoolefinisch ungesättigten Säuren und/oder deren Anhydriden und
   e) 0 bis 20 Gew.-% weiteren olefinisch ungesättigten Monomeren mit wenigstens einer der folgenden funktionellen Gruppen: Hydroxi-, Amid-, Epoxid-, Ether-, Ester-, Urethan-, Harnstoff-, prim., sek., tert. Amin und Ether und
   f) 0,1 bis 5 Gew.-% eines copolymerisierbaren Benzophenon- oder Acetophenonderivates,
wobei die Summe der Gewichtsprozente x = a + b + c + d + f jeweils 100 beträgt,
in Substanz oder in Lösung radikalisch polymerisiert.

**2.** Verfahren nach Anspruch 1, dadurch gekennzeichnet, daß als copolymerisierbares Benzophenonderivat 4-(Meth)acryloxy-benzophenon eingesetzt wird.

**3.** Verfahren nach Anspruch 1, dadurch gekennzeichnet, daß als copolymerisierbares Benzophenonderivat eine Mischung aus 2-(Meth)-acryloxybenzophenon und 4-(Meth)acryloxybenzophenon eingesetzt wird.

**Claims**
**Claims for the following Contracting States : AT, BE, CH, DE, FR, GB, IT, LI, NL, SE**

**1.** A material which is crosslinkable by ultraviolet radiation under atmospheric oxygen and is based on (meth)acrylate copolymers having a K value of from 10 to 100, obtained by free radical polymerization, in the presence or absence of a solvent, of
   a) from 5 to 97.4% by weight of isoamyl acrylate and/or isoamyl methacrylate,
   b) from 0 to 89.9% by weight of (meth)acrylates whose homopolymers have a glass transition temperature below -30°C,
   c) from 2.5 to 30% by weight of $\alpha,\beta$-monoolefinically unsaturated compounds whose homopolymers have a glass transition temperature above -30°C,
   d) from 0 to 10% by weight of monoolefinically unsaturated acids and/or their anhydrides and
   e) from 0 to 20% by weight of further olefinically unsaturated monomers having one or more of the following functional groups: hydroxyl, amide, epoxide, ether, ester, urethane, urea, primary, secondary and tertiary amine and ether groups, and
   f) from 0.1 to 5% by weight of a copolymerizable benzophenone derivative or acetophenone derivative,
the sum of the percentages by weight X (= a + b + c + d + f) being 100 in each case.

**2.** A material as claimed in claim 1, wherein the copolymerizable benzophenone derivative used is 4-(meth)acryloxybenzophenone.

**3.** A material as claimed in claim 1, wherein the copolymerizeable benzophenone derivative used is a mixture of 2-(meth)acryloxybenzophenone and 4-(meth)-acryloxybenzophenone.

**4.** A material as claimed in claim 1, wherein the copolymerizable benzophenone derivative used is 4-acryloxybutyl para-benzoylbenzoate.

9

**5.** A material as claimed in claim 1, wherein the copolymerizable benzophenone derivative used is 2-acryloxybutyl ortho-benzoylbenzoate.

**6.** A material as claimed in claim 1, wherein the copolymerizable benzophenone derivative used is (2-hydroxy-3-methacryloxy)-propyl ortho-benzoylbenzoate.

**7.** A material as claimed in any of claims 1 to 6, which has a Staudinger index of from 0.11 to 0.49 100 ml/g.

**8.** Use of a material as claimed in any of claims 1 to 7 as a hotmelt contact adhesive.

**9.** Use of a material as claimed in any of claims 1 to 7 as a hotmelt sealing compound.

**10.** Use of a hotmelt contact adhesive as claimed in claim 8, wherein the hotmelt contact adhesive is applied to a sheet-like substrate at room temperature or at elevated temperatures and is crosslinked by exposure to UV radiation.

**Claims for the following Contracting State : ES**

**1.** A process for the preparation of a material which is crosslinkable under atmospheric oxygen and is based on (meth)acrylate copolymers having a K value of from 10 to 100, which comprises free radical polymerization, in the presence or absence of a solvent, of a monomer mixture comprising
a) from 5 to 97.4% by weight of isoamyl acrylate and/or isoamyl methacrylate,
b) from 0 to 89.9% by weight of (meth)acrylates whose homopolymers have a glass transition temperature below -30°C,
c) from 2.5 to 30% by weight of $\alpha,\beta$-monoolefinically unsaturated compounds whose homopolymers have a glass transition temperature above -30°C,
d) from 0 to 10% by weight of monoolefinically unsaturated acids and/or their anhydrides and
e) from 0 to 20% by weight of further olefinically unsaturated monomers having one or more of the following functional groups: hydroxyl, amide, epoxide, ether, ester, urethane, urea, primary, secondary and tertiary amine and ether groups, and
f) from 0.1 to 5% by weight of a copolymerizable benzophenone derivative or acetophenone derivative,
the sum of the percentages by weight X (= a + b + c + d + f) being 100 in each case.

**2.** A process as claimed in claim 1, wherein the copolymerizable benzophenone derivative used is 4-(meth)acryloxybenzophenone.

**3.** A process as claimed in claim 1, wherein the copolymerizeable benzophenone derivative used is a mixture of 2-(meth)acryloxybenzophenone and 4-(meth)-acryloxybenzophenone.

**Revendications**
**Revendications pour les Etats contractants suivants : AT, BE, CH, DE, FR, GB, IT, LI, NL, SE**

**1.** Masses réticulables par exposition aux rayons ultraviolets sous atmosphère d'oxygène atmosphérique à base de copolymères de (méth)-acrylates d'un indice K de 10 à 100, obtenus par polymérisation radicale en masse ou en solution de
a) 5 à 97,4 % en poids d'acrylate d'i-amyle et/ou de méthacrylate d'i-amyle et
b) 0 à 89,9 % en poids de (méth-)acrylates dont les homopolymères présentent une température de transition vitreuse inférieure à -30 degrés C et
c) 2,5 à 30 % en poids de composés mono-oléfiniques alpha,bêta insaturés dont les homopolymères présentent une température de transition vitreuse inférieure à -30 degrés C et
d) 0 à 10 % en poids d'acides mono-oléfiniques insaturés et/ou les anhydrides de ces derniers et
e) 0 à 20 % en poids d'autres monomères oléfiniques insaturés avec au moins un des groupes fonctionnels suivants : hydroxy, amide, époxy, éther, ester, uréthane, carbamide et amine et éther primaires, secondaires, tertiaires et
f) 0,1 à 5 % en poids d'un dérivé copolymérisable de benzophénone ou d'acétophénone,
où la somme des pourcentages respectifs en poids (X = a + b + c + d + e + f) vaut 100.

**2.** Masses selon la revendication 1, caractérisées en ce que l'on emploie comme dérivé copolymérisable du benzophénone le 4-(méth-)acryloxy-benzophénone.

**3.** Masses selon la revendication 1, caractérisées en ce que l'on emploie comme dérivé copolymérisable du benzophénone un mélange constitué de 2-(méth-)-acryloxy-benzophénone et de 4-(méth-)acryloxy-benzophénone.

**4.** Masses selon la revendication 1, caractérisées en ce que l'on emploie comme dérivé copolymérisable du benzophénone le benzoate de (4-acryloxy-)butyl-para-benzoyle.

**5.** Masses selon la revendication 1, caractérisées en ce que l'on emploie comme dérivé copolymérisable du benzophénone le benzoate de (2-acryloxy-)butyl-ortho-benzoyle.

**6.** Masses selon la revendication 1, caractérisées en ce que l'on emploie comme dérivé copolymérisable du benzophénone le benzoate de (2-hydroxy-3-méthacyloxy-)propyl-ortho-benzoyle.

**7.** Masses selon les revendications 1 à 6, caractérisées en ce qu'ils présentent un indice de viscosité de staudinger de 0,11 à 0,49 100 ml/g.

**8.** Emploi des masses selon les revendications 1 à 7 comme colle de contact fusible.

**9.** Emploi des masses selon les revendications 1 à 7 comme masses d'étanchéité fusibles.

**10.** Emploi de la colle de contact fusible selon la revendication 8, caractérisé en ce que l'on applique la colle fusible sur des substrats plans, à température ambiante ou à des températures plus élevées et qu'on procède à sa réticulation en l'exposant aux rayons ultraviolets.

**Revendications pour l'Etat contractant suivant : ES**

**1.** Procédé de préparation de masses réticulables par exposition aux rayons ultraviolets sous atmosphère d'oxygène atmosphérique à base de copolymères de (méth)-acrylates d'un indice K de 10 à 100, caractérisé en ce que l'on polymérise radicalement en masse ou en solution un mélange de monomères
a) de 5 à 97,4 % en poids d'acrylate d'i-amyle et/ou de méthacrylate d'i-amyle et
b) de 0 à 89,9 % en poids de (méth-)acrylates dont les homopolymères présentent une température de transition vitreuse inférieure à -30 degrés C et
c) de 2,5 à 30 % en poids de composés monooléfiniques alpha,bêta insaturés dont les homopolymères présentent une température de transition vitreuse inférieure à -30 degrés C et
d) de 0 à 10 % en poids d'acides mono-oléfiniques insaturés et/ou les anhydrides de ces derniers et
e) de 0 à 20 % en poids d'autres monomères oléfiniques insaturés avec au moins un des groupes fonctionneis suivants : hydroxy, amide, époxy, éther, ester, uréthane, carbamide et amine et éther primaires, secondaires, tertiaires et
f) de 0,1 à 5 % en poids d'un dérivé copolymérisable de benzophénone ou d'acétophénone,
où la somme des pourcentages respectifs en poids (X = a + b + c + d + e + f) vaut 100.

**2.** Procédé selon la revendication 1, caractérisé en ce que l'on emploie comme dérivé copolymérisable du benzophénone le 4-(méth-)acryloxy-benzophénone.

**3.** Procédé selon la revendication 1, caractérisé en ce que l'on emploie comme dérivé copolymérisable du benzophénone un mélange constitué de 2-(méth-)-acryloxy-benzophénone et de 4-(méth-)acryloxy-benzophénone.